# EUROPÄISCHE PATENTSCHRIFT

(11) **EP 1 833 707 B1**
(45) Veröffentlichungstag und Bekanntmachung des Hinweises auf die Patenterteilung: **28.07.2010**
(21) Anmeldenummer: 05801658.5
(22) Anmeldetag: 02.11.2005
(51) Int. Cl.: B60S 1/34

(54) **SCHEIBENWISCHVORRICHTUNG**
WINDSCREEN WIPER SYSTEM
SYSTEME D'ESSUIE-GLACE

(30) Priorität: 29.12.2004 DE 102004063178
(43) Veröffentlichungstag der Anmeldung: 19.09.2007
(73) Patentinhaber: ROBERT BOSCH GMBH, 70442 Stuttgart (DE)
(72) Erfinder: KRAEMER, Godelieve, 76549 Huegelsheim (DE)
(86) Internationale Anmeldenummer: PCT/EP2005/055707
(87) Internationale Veröffentlichungsnummer: WO 2006/072488

(56) Entgegenhaltungen:
- WO-A-2005/054018
- FR-A- 1 026 098
- GB-A- 2 151 465
- US-A- 2 226 358
- US-A- 2 353 208

## Beschreibung

Die Erfindung betrifft eine Scheibenwischvorrichtung, insbesondere für ein Kraftfahrzeug, mit mindestens einem einen Federbalken aufweisenden Wischarm und einem Befestigungsteil.

Aus dem Stand der Technik sind Wischarme mit einer Zugfeder bekannt, wobei die Zugfeder den Wischarm im Wischbetrieb gegen die Scheibe drückt, und beim Wechseln eines Wischblattes in einer von der Scheibe abgeklappten Position hält. Diese Variante erfordert relativ viele Bauteile und einen damit verbundenen relativ hohen Montageaufwand, so dass die Kosten für diese Variante hoch sind.

Außerdem sind auch gelenkfreie Wischarme bekannt. Diese Wischarme weisen einen Federbalken auf, der unbeweglich am Befestigungsteil montiert ist. Um diesen Wischarm von der Scheibe wegklappen oder zu ihr hinklappen zu können, ist der Federbalken mit einer Vorspannung versehen, so dass er ab einem bestimmten Abstand des Wischblattes von der Scheibe von selbst von der Scheibe wegklappt oder zur Scheibe hinklappt, je nachdem, ob man das Wischblatt von der Scheibe wegführt oder zu ihr hinführt. Nachteilig bei diesen Wischarmen ist jedoch, dass die Kraft für die erforderliche Vorspannung des Federbalkens mit der Kraft zum Wegklappen des Wischblatts schwierig abzustimmen ist, so dass die Gefahr besteht, dass der Wischarm bei starkem Fahrtwind oder bei Fahrzeugschwingungen, beispielsweise beim Durchfahren von Schlaglöchern, überraschend von der Scheibe wegklappt.

US-A-2353208 offenbart den Oberbegriff des Anspruchs 1.

Die Erfindung hat die Aufgabe, die oben genannten aus dem Stand der Technik bekannten Nachteile zukünftig zu vermeiden.

Die Erfindung löst die gestellte Aufgabe mit einer Scheibenwischvorrichtung der eingangs genannten Art, bei der erfindungsgemäß der Federbalken verschwenkbar am Befestigungsteil angeordnet ist. Die Anpresskraft des Wischarms, die aus der Vorspannung des Federbalkens resultiert, kann somit gut auf die erforderliche Kraft zum Wegklappen des Wischblatts von der Scheibe abgestimmt werden. Der Federbalken ist als eine auf Biegung beanspruchbare Blattfeder ausgelegt, sodass das Wischblatt durch den Federbalken im Wischbetrieb gegen die Scheibe gedrückt wird. Auf die bisher erforderliche Zugfeder kann somit verzichtet werden, wodurch die erfindungsgemäße Scheibenwischvorrichtung weniger Bauteile aufweist und deshalb preisgünstiger ist.

Die Blattfeder kann aus einem Kohlenstoff gefertigt sein, wobei das Material anschließend gehärtet und angelassen wird, damit das Material seine Eigenschaften von Federstahl bekommt.

Um den Wischarm verschwenken zu können, kann das Befestigungsteil ein Gelenk aufweisen.

Sehr einfach und somit preiswert lässt sich das Gelenk mit einer Gelenkachse realisieren, wenn das Gelenk am Befestigungsteil angespritzt oder angegossen ist.

Wenn der Federbalken einen in die Gelenkachse einhängbaren Haken aufweist, kann der Wischarm mit einem kurzen Handgriff am Gelenk montiert werden. Außerdem ermöglicht der Haken die Schwenkbewegung des Wischarms um die Gelenkachse.

In einer Weiterbildung der Erfindung kann die Gelenkachse ein in das Befestigungsteil eingepresster Nietstift sein. Durch diese einfache Konstruktion lässt sich das Gelenk preiswert herstellen.

An dem Federbalken ist eine Federlasche vorgesehen sein. Die Federlasche arretiert den Wischarm in der Betriebsstellung, sodass ein am Wischarm angebrachtes Wischblatt gegen die Scheibe gedrückt wird. Die Federlasche kann sinnvollerweise so konstruiert sein, dass der Federbalken das Wischblatt mit einer bestimmten Vorspannung gegen die Scheibe drückt, wenn der Wischarm in der Betricbsstellung arretiert ist.

Wenn die Federlasche und der Federbalken einstückig ausgebildet sind, können Montageschritte entfallen, um die Federlasche und den Federbalken miteinander zu verbinden.

Die Federlasche ist aus dem Federbalken herausgeschnitten werden. Dadurch wird das Material des Federbalkens optimal verwertet. Außerdem können auf diese Weise die Federlasche und der Federbalken cinstückig hergestellt werden, wenn die Federlasche mindestens an einer Seite mit dem Federbalken verbunden bleibt.

Zusätzlich oder alternativ zur Federlasche kann der Federbalken mindestens eine Bügelfeder aufweisen. Diese Alternative wird nicht von den Ansprüchen abgedeckt.

Um weitere Montageschritte einzusparen, können die mindestens eine Bügelfeder und der Federbalken einstückig sein.

Vorteilhafterweise kann das freie Ende der Federlasche und/oder der Bügelfeder umgebogen sein. Somit kann das freie Ende der Federlasche und/oder der Bügelfeder beim Verschwenken des Wischarms besser auf dem Befestigungsteil gleiten.

Die Federlasche und/oder die Bügelfeder kann eine Sicke aufweisen. In der Betriebstellung des Wischarms liegt die Sicke an einer Kante des Befestigungsteils an, wodurch der Wischarm in der Betriebsstellung arretiert wird.

Auf dem Befestigungsteil kann ein Noppen vorgesehen sein, der in eine am Federbalken angebrachte Öffnung eingreift. Vorteilhafterweise greift der Noppen formschlüssig in die Öffnung ein, wodurch das Gelenk im Wischbetrieb beim Richtungswechsel des Wischarms entlastet wird, sodass das Gelenk nicht das gesamte für die Wischbewegung erforderliche Drehmoment aufnehmen muss. Somit wird vermieden, dass im Laufe der Zeit zwischen dem Gelenk und dem am Federbalken angebrachten Haken ein stetig zunehmendes Spiel entsteht, was dazu führen könnte, dass das Wischblatt bei der Umkehr der Wischbewegung kurzzeitig stehen bleibt oder sich zu weit zur Scheibe neigt.

Die am Federbalken angebrachte Öffnung, in welche der Noppen eingreift, kann der herausgeschnitten Federlasche entsprechen. Somit erfüllt die durch das Ausschneiden der Federlasche gewonnene Öffnung eine nützliche Funktion.

Das Befestigungsteil kann zweckmäßigerweise eine Führungsnut aufweisen, in der die Federlasche auf dem Befestigungsteil gleiten kann.

Das Befestigungsteil kann eine Auflage für den Federbalken aufweisen. Um den Federbalken mit der mindestens einen Bügelfeder vorzuspannen, kann er auf der Auflage abgestützt werden.

In einer weiteren Ausführungsform kann das Gelenk Wangen aufweisen, welche den in das Gelenk einhängbaren Haken seitlich umgreifen. Auf diese Weise wird das Gelenk ebenfalls entlastet, damit es insbesondere beim Wechsel der Wischbewegung nicht das gesamte für die Wischbewegung erforderliche Drehmoment aufnehmen muss. Somit wird verhindert, dass im Laufe der Zeit zwischen dem Gelenk und dem am Federbalken angebrachten Haken ein stetig zunehmendes Spiel entsteht, das durch die vorgegebene Dauerbelastung zu groß wird.

Aus demselben Grund kann der in das Gelenk einhängbare Haken an seinem freien Ende eine Verlängerung aufweisen. Die Verlängerung kann sich dann an den Wangen des Gelenkes abstützen, wodurch ein unerwünschtes Spiel zwischen der Verlängerung und den Wangen ausgeschlossen wird.

Wenn das Befestigungsteil ein Spritzgussteil ist, kann es in großen Stückzahlen preiswert hergestellt werden.

Vom Gewicht und von den Materialeigenschaften her sind Aluminium, Zink oder verstärkte Kunststoffe bevorzugte Werkstoffe für das Befestigungsteil.

In einer alternativen Ausführungsform lässt sich das Befestigungsteil auch als ein Blechbiegeteil in großen Stückzahlen preiswert herstellen.

Aus Gründen eines ansprechenden Designs kann über dem Federbalken eine Abdeckung angebracht werden. Es ist möglich, die Abdeckung auf den Federbalken aufzuschieben oder aufzuklipsen.

Damit sich der Federbalken im von der Scheibe weggeklappten Zustand nicht vom Gelenk lösen kann, kann die Verlängerung des Hakens um die Gelenkachse herumgebogen werden, nachdem der Haken in die Gelenkachse eingehängt ist.

In einer alternativen Ausführungsform kann an der Innenseite der Abdeckung eine Rastnase, die durch eine Öffnung im Federbalken durchsteckbar und mit ihm verrastbar ist, angeordnet sein, wobei die Rastnase in der Betriebsstellung des Wischarms an der Gelenkachse an ihrer dem Wischblatt zugewandten Seite anliegt. Somit verhindert die durch den Federbalken durchgesteckte und an der Gelenkachse anliegende Rastnase, dass sich der Federbalken im von der Scheibe weggeklappten Zustand vom Gelenk lösen kann.

Um den Wischarm zum Wechsel des Wischblattes in eine stabile Lage von der Scheibe wegklappen zu können, kann die Abdeckung und/oder der Federbalken eine Anlagefläche aufweisen, an der das Befestigungsteil anliegt, wenn der Wischarm von der Scheibe weggeklappt ist. Entsprechend der Ausgestaltung der Anlagefläche kann der Wischarm um mehr als 90 Grad von der Scheibe weggeklappt werden, sodass der Wischarm zum Wechsel des Wischblattes in einer stabilen Lage verharrt.

Die Abdeckung kann preiswert in großen Stückzahlen hergestellt werden, wenn sie aus Kunststoff, hergestellt ist.

Damit das Wischblatt bequem ausgetauscht werden kann, kann der Federbalken eine Anlagefläche aufweisen, die beim von der Scheibe weggeklappten Wischarm am Befestigungsteil anliegt.

Nachfolgend werden verschiedene Ausführungsbeispiete der erfindungsgemäßen Scheibenwischvorrichtung anhand der beiliegenden Zeichnungen näher erläutert.

Im Einzelnen zeigen:
- Fig. 1: eine perspektivische Draufsicht auf einen Wischarm mit Wischblatt;
- Fig. 2: eine perspektivische Explosionsdarstellung auf den Wischarm aus Fig. 1;
- Fig. 3: eine perspektivische Ansicht auf eine erste Ausführungsform eines Federbalkens;
- Fig. 4: eine perspektivische Ansicht auf eine zweite nicht beanspruchte Ausführungsform des Federbalkens;
- Fig. 5: eine perspektivische Ansicht auf eine erste Ausführungsform eines Befestigungsteils und eine dritte nicht beanspruchte Ausführungsform des Federbalkens;
- Fig. 6: eine perspektivische Draufsicht auf eine zweite Ausführungsform des Befestigungsteils;
- Fig. 7: eine perspektivische Draufsicht auf eine dritte nicht beanspruchte Ausführungsform des Befestigungsteils;
- Fig. 8: eine perspektivische Draufsicht auf das Befestigungsteil und den Federbalken zu Beginn eines Arretierungsvorganges einer Federlasche;
- Fig. 9: eine perspektivische Draufsicht auf das Befestigungsteil und den Federbalken am Ende des Arretierungsvorganges der Federlasche;
- Fig. 10: eine perspektivische Draufsicht auf das Befestigungsteil und den Federbalken zu Beginn eines Arretierungsvorganges zweier Bügelfedern;
- Fig. 11: eine perspektivische Draufsicht auf das Befestigungsteil und den Federbalken am Ende des Arretierungsvorganges der beiden Bügelfedern;
- Fig. 12: eine Seitenansicht eines weggeklappten Federbalkens mit umgebogenem Haken;
- Fig. 13: eine perspektivische Ansicht eines weggeklappten Federbalkens mit nicht umgebogenem Haken;
- Fig. 14: eine perspektivische Ansicht auf den Federbalken aus Fig. 13 mit aufgesetzter Abdeckung;
- Fig. 15: eine Seitenansicht auf die Abdeckung bei einem von der Scheibe weggeklapptem Wischarm.

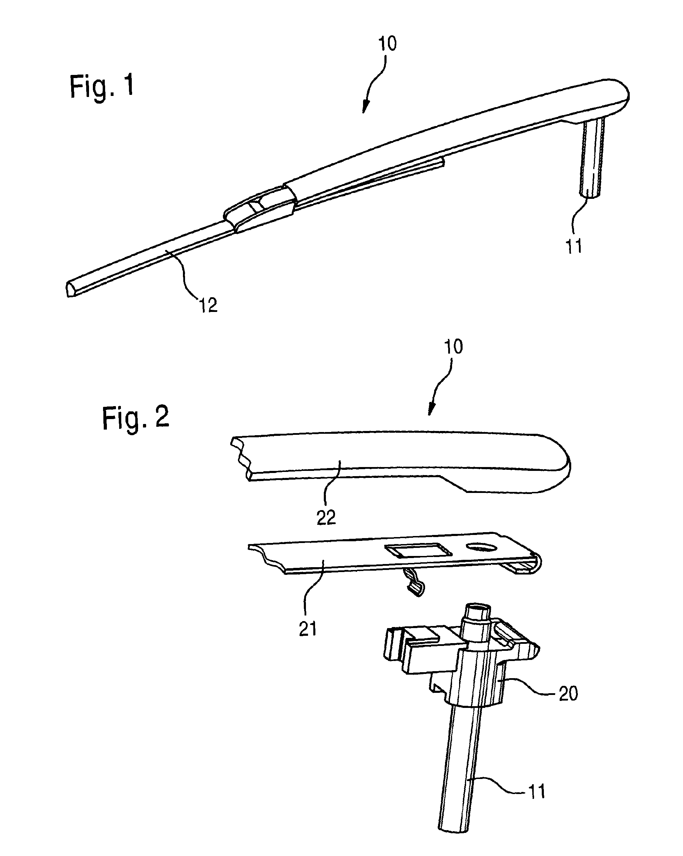

Die Fign. 1 und 2 zeigen einen Wischarm 10, der auf eine Wischerwelle 11 montiert und mit einem Wischblatt 12 versehen ist. Auf der Wischerwelle 11 befindet sich ein Befestigungsteil 20. An dem Befestigungsteil 20 kann ein Federbalken 21 verschwenkbar befestigt werden, der mit einer Abdeckung 22 abgedeckt werden kann.

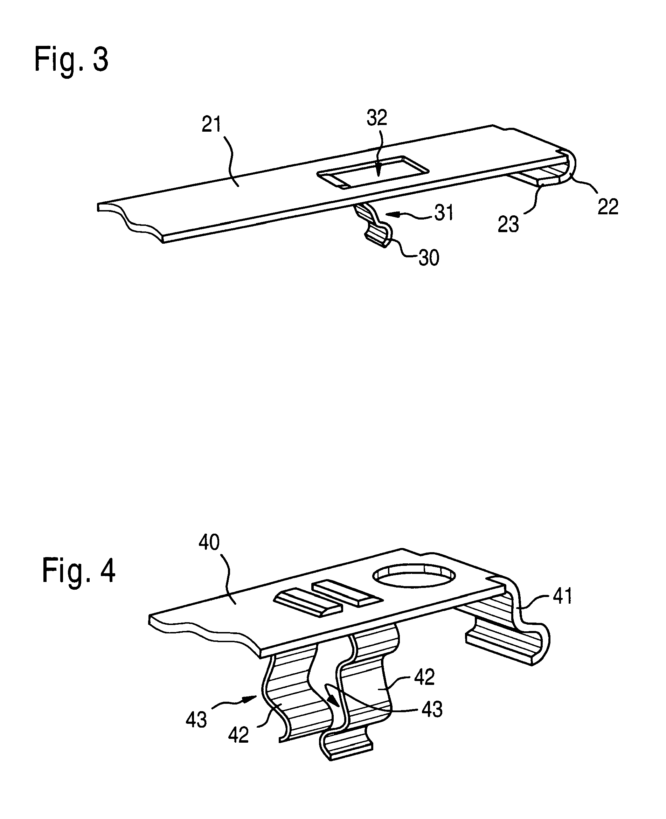

Der Federbalken 21 weist eine Federlasche 30 auf (siehe Fig. 3), mit welcher der Wischarm 10 in einer Betriebsstellung arretiert werden kann, um das Wischblatt 12 gegen eine hier nicht näher gezeigte Scheibe zu drücken. Die Federlasche 30 wird aus dem Federbalken 21 herausgeschnitten, vorzugsweise herausgestanzt, sodass die Federlasche 30 und der Federbalken 21 einstückig hergestellt werden können.

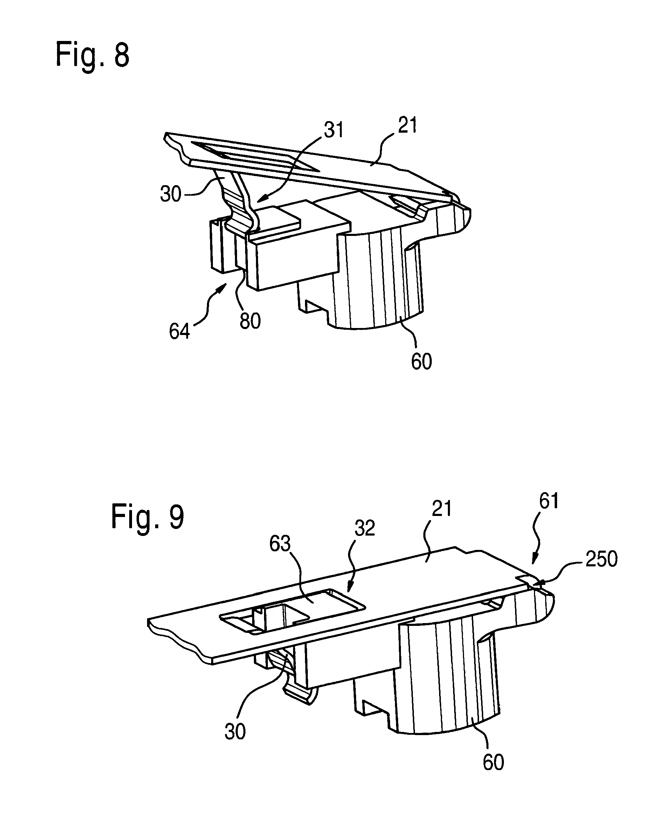

Die Federlasche 30 ist an ihrem freien Ende umgebogen, damit sie beim Verschwenken des Wischarms 10 besser auf dem Befestigungsteil gleiten kann (siehe Fign. 8 und 9).

Die Federlasche 30 weist außerdem eine Sicke 31 auf (siehe Fig. 3), um den Wischarm am Befestigungsteil zu arretieren (siehe Fign. 8 und 9).

Außerdem weist der Federbalken 21 in Fig. 3 einen Haken 22 auf, der an seinem freien Ende mit einer Verlängerung 23 versehen ist. Der Haken 22 kann in ein Gelenk am Befestigungsteil 20 eingehängt werden.

Fig. 4. zeigt einen Federbalken 40, der zusätzlich zu einem Haken 41 zwei Bügelfedern 42 aufweist. Die Bügelfedern 42 dienen ebenfalls dazu den Wischarm 10 in seiner Betriebsstellung zu arretieren, damit der Federbalken 40 mit seiner Anpresskraft den Anpressdruck auf das Wischblatt übertragen kann.

Im dargestellten Ausführungsbeispiel sind die Bügelfedern 42 und der Federbalken 40 separate Teile, wobei die Bügelfedern 42 gebogene Metallteile oder faserverstärkte Kunststoffteile sein können.

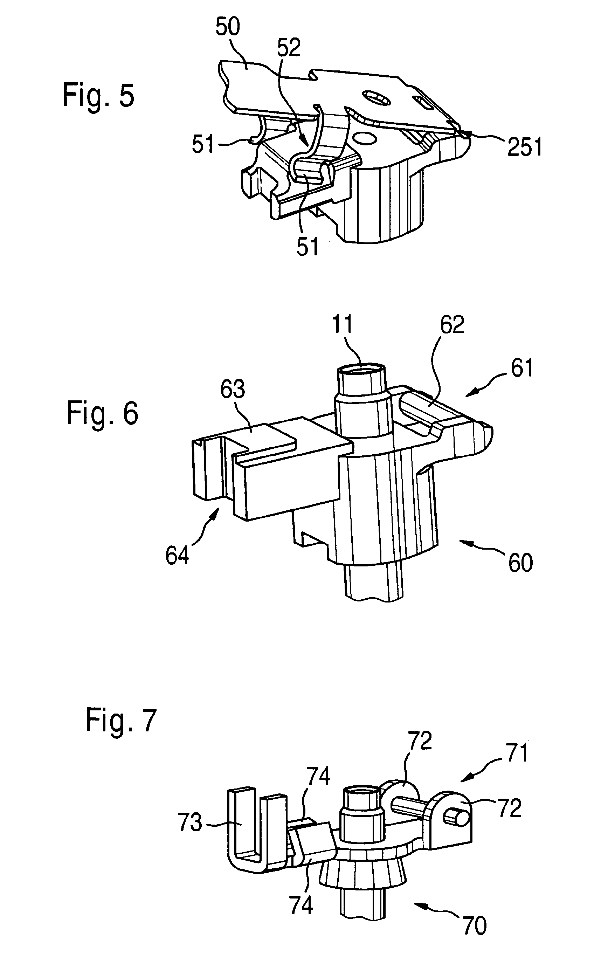

Fig. 5 zeigt jedoch eine Möglichkeit, wonach ein Federbalken 50 und Bügelfedern 51 einstückig hergestellt sind, um Montageschritte zu sparen.

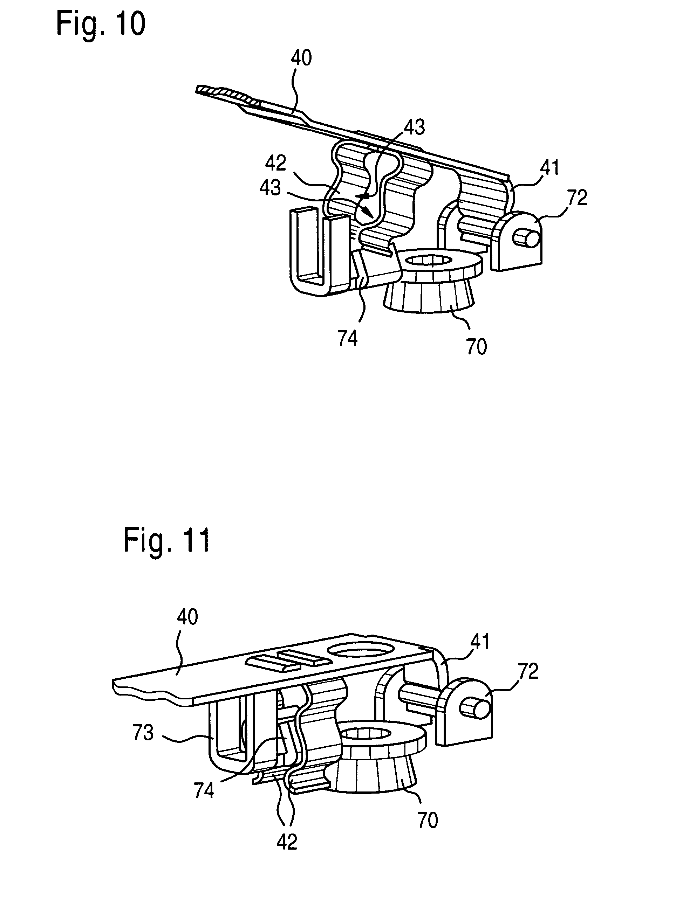

Das freie Ende der Bügelfedern 42 und 51 ist ebenfalls umgebogen, damit es beim Aufklipsen auf ein Befestigungsteil 70 (siehe Fign. 10 und 11) besser gleiten kann.

Die Bügelfedern 42 und 51 weisen außerdem eine Sicke 43 und 52 auf, um den Wischarm am Befestigungsteil möglichst sicher zu arretieren.

Fig. 6 zeigt ein auf der Wischerwelle 11 montiertes Befestigungsteil 60. das Befestigungsteil 60 ist mit einem Gelenk 61 versehen, in welches der Haken 22 des Federbalkens 21 aus Fig. 3 eingehängt werden kann. Das Gelenk 61 weist eine Gelenkachse 62 auf. Die Gelenkachse 62 kann als ein in das Befestigungsteil 60 eingepresster Nietstift realisiert werden.

Ferner weist das Befestigungsteil 60 einen Noppen 63 auf, der in eine am Federbalken 21 angebrachte Öffnung 32 (siehe Fig. 3) formschlüssig eingreift. Durch den formschlüssigen Eingriff des Noppens 63 in die Öffnung 32 wird das Gelenk 61 im Wischbetrieb, insbesondere beim Richtungswechsel des Wischarms entlastet. Folglich muss das Gelenk 61 nicht das gesamte für die Wischbewegung erforderliche Drehmoment aufnehmen. Dadurch wird vermieden, dass im Laufe der Zeit zwischen dem Gelenk 61 und dem Haken 22 (siehe Fig. 3) ein stetig zunehmendes Spiel entsteht, wodurch das Wischblatt während der Wischbewegung im Umkehrpunkt kurzzeitig stehen bleiben könnte oder sich zu weit zur Scheibe neigt.

Das Befestigungsteil 60 weist außerdem eine Führungsnut 64 auf, in welcher die Federlasche 30 (siehe Fig. 3) beim Gleiten auf dem Befestigungsteil 60 geführt wird (siehe Fig. 8).

Das in Fig. 6 gezeigte Befestigungsteil 60 kann vorzugsweise ein Spritzgussteil sein, das aus Aluminium, aus Zink oder aus einem verstärkten Kunststoff hergestellt werden kann.

Fig. 7 zeigt ein Befestigungsteil 70 mit einem Gelenk 71, das mit Wangen 72 versehen ist. Wenn der Federbalken 40 mit seinem Haken 41 (siehe Fig. 4) in das Befestigungsteil 70 eingehängt wird, umgreifen die Wangen 72 den Haken 41 (siehe Fign. 10 und 11). Auf diese Weise wird das Gelenk 71 entlastet, um nicht das gesamte für die Wischbewegung erforderliche Drehmoment aufnehmen zu müssen. Somit wird ein stetig zunehmendes Spiel zwischen dem Gelenk 71 und dem Haken 22, das durch die Dauerbelastung zu groß wird, vermieden.

Das Befestigungsteil 70 weist eine Auflage 73 auf (siehe Fig. 7), auf welcher der Federbalken 40 aufliegen kann(siehe Fig. 11). Wenn die Bügelfedern 42 an Arretierelementen 74 (siehe Fign. 7 und 11) einrasten, liegt der Federbalken 40 auf der Auflage 73 auf. Der Federbalken 40 ist im Bereich einer Wischblatteinhängung vorgespannt und kann die Vorspannkraft auf das Wischblatt übertragen.

Das in Fig. 7 dargestellte Befestigungsteil 70 kann vorzugsweise ein Blechbiegeteil sein.

Die Fign. 8 und 9 illustrieren den Einrastvorgang des Federbalkens 21 mit dem Befestigungsteil 60. Dabei wird der Federbalken 21 nach unten gegen die Scheibe verschwenkt, wobei die Federlasche 30 mit ihrem freien umgebogenen Ende entlang der Nut 64 nach unten gleitet. Wenn der Federbalken 21 auf dem Befestigungsteil 60 aufliegt, rastet die Lasche 30 mit ihrer Sicke 31 am Ende der Nut 64 an einer Kante 80 ein, wodurch der Federbalken 21 in seiner Betriebsstellung arretiert und gleichzeitig vorgespannt wird (siehe Fig. 9).

In dieser Betriebsstellung (siehe Fig. 9) greift der Noppen 63 formschlüssig in die Öffnung 32 ein, wodurch bei der Wischbewegung das Gelenk 61 entlastet wird.

Die Fign. 10 und 11 zeigen den Einrastvorgang des Federbalkens 40 auf dem Befestigungsteil 70. Auch in diesem Fall wird der Federbalken 40 nach unten gegen die Scheibe verschwenkt, wobei die Bügelfedern 42 mit ihrem freien umgebogenen Ende über die Arretierelemente 74 nach unten gleiten. Wenn der Federbalken 40 auf Auflage 73 aufliegt, rasten die Bügelfedern 42 mit ihren Sicken 43 an den Arretierelementen 74 ein. Dadurch wird der Federbalken 40 in seiner Betriebsstellung arretiert und ebenfalls vorgespannt (siehe Fig. 11).

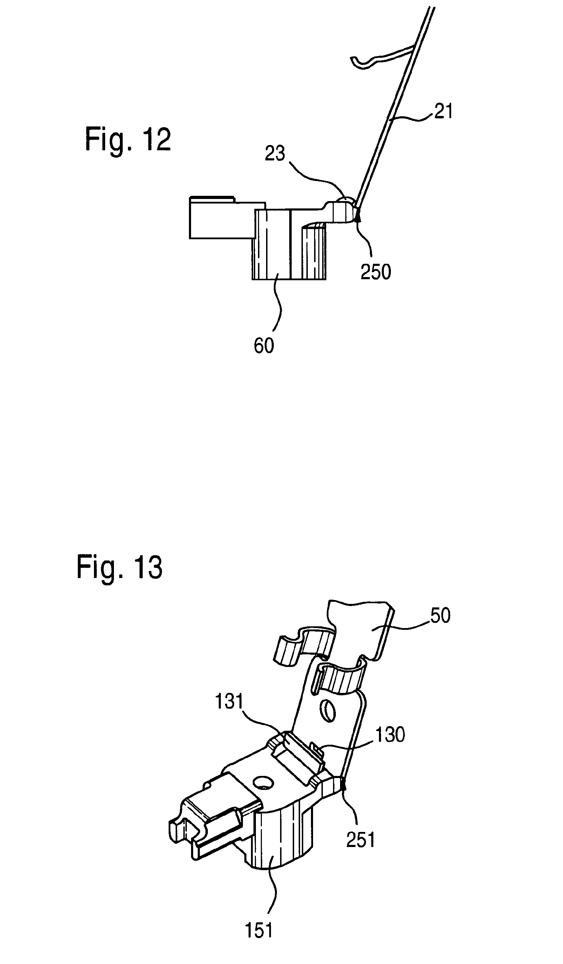

Fig. 12 zeigt den Federbalken 21 (siehe auch Fig. 3) bei dem die Verlängerung 23 des Hakens 22 um die hier nicht erkennbare Gelenkachse gebogen ist. Somit kann sich der Federbalken 21 bei von der Scheibe weggeklapptem Wischarm nicht von der Gelenkachse lösen.

Außerdem zeigt Fig. 12 den Federbalken 21 im von der Scheibe weggeklappten Zustand. Der Federbalken 21 weist eine Anlagefläche 250 auf (siehe auch Fig. 9), die auf dem Befestigungsteil 60 aufliegt. Im von der Scheibe weggeklappten Zustand kann das Wischblatt gewechselt werden.

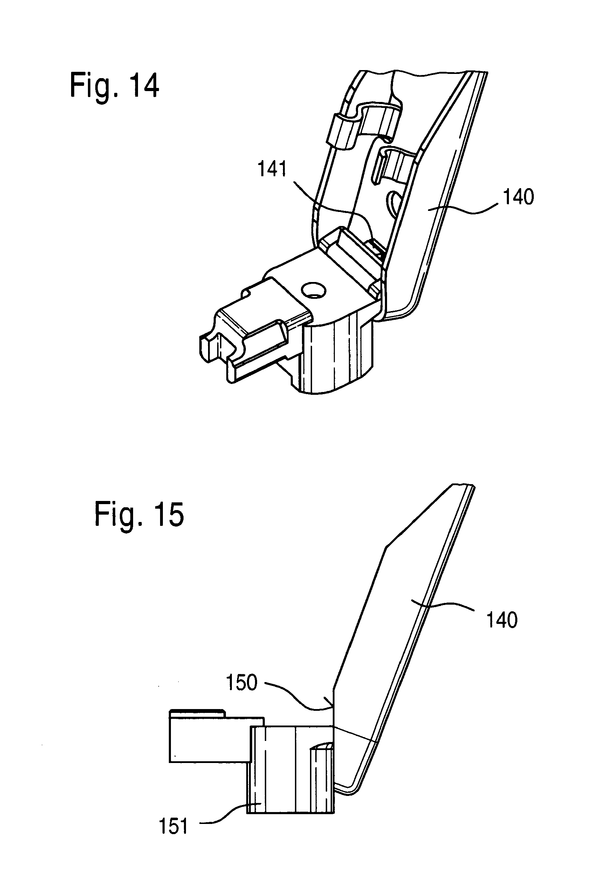

Fig. 13 zeigt den Federbalken 50 aus Fig. 5, der eine Öffnung 130 aufweist, durch den eine an einer Abdeckung 140 angebrachte Rastnase 141 (siehe Fig. 14) gesteckt werden kann. Durch die Rastnase 141 kann die Abdeckung 140 an dem Federbalken 50 befestigt werden. Außerdem verhindert die Rastnase 141, dass sich der Federbalken 50 im von der Scheibe weggeklappten Zustand nicht mehr von der hier ebenfalls nicht erkennbaren Gelenkachse lösen kann. Somit muss eine Verlängerung 131 des in die Gelenkachse einhängbaren Hakens nicht umgebogen werden.

Fig. 13 zeigt den Federbalken 50 im von der Scheibe weggeklappten Zustand. Der Federbalken 50 weist eine Anlagefläche 251 auf (siehe auch Fig. 5), die auf einem Befestigungsteil 151 aufliegt. Im von der Scheibe weggeklappten Zustand kann das Wischblatt gewechselt werden.

Fig. 15 zeigt die Abdeckung 140 im von der Scheibe weggeklappten Zustand. Die Abdeckung 140 weist eine schräge Anlagefläche 150 auf, die an einem Befestigungsteil 151 anliegt. Durch die schräge Anlagefläche 150 kann der Wischarm um mehr als 90 Grad von der Scheibe weggeklappt werden. In dieser Stellung verharrt der Wischarm von selbst, sodass das Wischblatt gewechselt werden kann.

## Patentansprüche

1. Scheibenwischvorrichtung, insbesondere für ein Kraftfahrzeug, mit mindestens einem einen Federbalken (21) aufweisenden Wischarm (10) und einem Befestigungsteil (20, 60), wobei der Federbalken (21) verschwenkbar am Befestigungsteil (20, 60) angeordnet ist, wobei an dem Federbalken (21) eine Federlasche (30) vorgesehen ist, **dadurch gekennzeichnet dass** die Federlasche (30) aus dem Federbalken (21) herausgeschnitten ist, und dass auf dem Befestigungsteil (60) ein Noppen (63) vorgesehen ist, der in eine am Federbalken (21) angebrachte Öffnung (32) eingreift, und dass die am Federbalken (21) angebrachte Öffnung (32) der herausgeschnittenen Federlasche (30) entspricht.

2. Scheibenwischvorrichtung nach Anspruch 1, **dadurch gekennzeichnet, dass** das Befestigungsteil (20, 60) ein Gelenk (61) aufweist.

3. Scheibenwischvorrichtung nach Anspruch 2, **dadurch gekennzeichnet, dass** das Gelenk (61) eine Gelenkachse (62) aufweist.

4. Scheibenwischvorrichtung nach Anspruch 3, **dadurch gekennzeichnet, dass** der Federbalken (21) einen in die Gelenkachse (62) einhängbaren Haken (22) aufweist.

5. Scheibenwischvorrichtung nach Anspruch 3 oder 4, **dadurch gekennzeichnet, dass** die Gelenkachse (62) ein in das Befestigungsteil (20, 60) eingepresster Nietstift ist.

6. Scheibenwischvorrichtung nach einem der Ansprüche 1 bis 5, **dadurch gekennzeichnet, dass** das freie Ende der Federlasche (30) umgebogen ist.

7. Scheibenwischvorrichtung nach einem der Ansprüche 1 bis 6, **dadurch gekennzeichnet, dass** die Federlasche (30) eine Sicke (31) aufweist.

8. Scheibenwischvorrichtung nach einem der Ansprüche 1 bis 7, **dadurch gekennzeichnet, dass** das Befestigungsteil (60) eine Führungsnut (64) zur Führung der Federlasche (30) aufweist.

9. Scheibenwischvorrichtung nach Anspruch 4, **dadurch gekennzeichnet, dass** der in das Gelenk (61) einhängbare Haken (22) an seinem freien Ende eine Verlängerung (23) aufweist.

10. Scheibenwischvorrichtung nach einem der Ansprüche 1 bis 9, **dadurch gekennzeichnet, dass** das Befestigungsteil (60) ein Spritzgussteil ist.

11. Scheibenwischvorrichtung nach Anspruch 10, **dadurch gekennzeichnet, dass** das Befestigungsteil (60) aus Aluminium, Zink oder aus einem verstärkten Kunststoff herstellbar ist.

12. Scheibenwischvorrichtung nach einem der Ansprüche 1 bis 11, **dadurch gekennzeichnet, dass** über dem Federbalken (21) eine Abdeckung (140) anbringbar ist.

13. Scheibenwischvorrichtung nach einem Anspruch 9, **dadurch gekennzeichnet, dass** die Verlängerung (23) um die Gelenkachse (62) herumbiegbar ist, nachdem der Haken (22) in die Gelenkachse (62) eingehängt ist.

14. Scheibenwischvorrichtung nach Anspruch 12, **dadurch gekennzeichnet, dass** die Abdeckung (140) eine Anlagefläche (150) aufweist, die bei von der Scheibe weggeklapptem Wischarm am Befestigungsteil (151) anliegt.

15. Scheibenwischvorrichttung nach einem der Ansprüche 12, 14, **dadurch gekennzeichnet, dass** die Abdeckung (140) aus Kunststoff gefertigt ist.

16. Scheibenwischvorrichtung nach einem der Ansprüche 1 bis 15, **dadurch gekennzeichnet, dass** der Federbalken (21) eine Anlagefläche (250) aufweist, die beim von der Scheibe weggeklappten Wischarm am Befestigungsteil (60) anliegt.

## Claims

1. Windscreen wiper device, in particular for a motor vehicle, with at least one wiper arm (10) having a spring bar (21), and with a fastening part (20, 60), wherein the spring bar (21) is arranged pivotably on the fastening part (20, 60), and wherein a spring tab (30) is provided on the spring bar (21), **characterized in that** the spring tab (30) is cut out of the spring bar (21), and **in that** a knob (63) is provided on the fastening part (60), said knob engaging in an opening (32) provided on the spring bar (21), and **in that** the opening (32) provided on the spring bar (21) corresponds to the cut-out spring tab (30).

2. Windscreen wiper device according to Claim 1, **characterized in that** the fastening part (20, 60) has a hinge (61).

3. Windscreen wiper device according to Claim 2, **characterized in that** the hinge (61) has a hinge pin (62).

4. Windscreen wiper device according to Claim 3, **characterized in that** the spring bar (21) has a hook (22) which can be hooked into the hinge pin (62).

5. Windscreen wiper device according to Claim 3 or 4, **characterized in that** the hinge pin (62) is a rivet pin which is pressed into the fastening part (20, 60).

6. Windscreen wiper device according to one of Claims 1 to 5, **characterized in that** the free end of the spring tab (30) is bent over.

7. Windscreen wiper device according to one of Claims 1 to 6, **characterized in that** the spring tab (30) has a bead (31).

8. Windscreen wiper device according to one of Claims 1 to 7, **characterized in that** the fastening part (60) has a guide groove (64) for guiding the spring tab (30).

9. Windscreen wiper device according to Claim 4, **characterized in that** the free end of the hook (22) which can be hooked into the hinge (61) has an extension (23).

10. Windscreen wiper device according to one of Claims 1 to 9, **characterized in that** the fastening part (60) is an injection-moulded part.

11. Windscreen wiper device according to Claim 10, **characterized in that** the fastening part (60) can be produced from aluminium, zinc or from a reinforced plastic.

12. Windscreen wiper device according to one of Claims 1 to 11, **characterized in that** a covering (140) can be attached over the spring bar (21).

13. Windscreen wiper device according to Claim 9, **characterized in that** the extension (23) can be bent around the hinge pin (62) after the hook (22) is hooked into the hinge pin (62).

14. Windscreen wiper device according to Claim 12, **characterized in that** the covering (140) has a bearing surface (150) which bears against the fastening part (151) when the wiper arm is swung away from the windscreen.

15. Windscreen wiper device according to either of Claims 12 and 14, **characterized in that** the covering (140) is manufactured from plastic.

16. Windscreen wiper device according to one of Claims 1 to 15, **characterized in that** the spring bar (21) has a bearing surface (250) which bears against the fastening part (60) when the wiper arm is swung away from the windscreen.

## Revendications

1. Dispositif d'essuie-glace, notamment pour un véhicule automobile, comprenant au moins un bras d'essuie-glace (10) présentant une poutre à ressort (21) et comprenant une partie de fixation (20, 60), la poutre à ressort (21) étant disposée de manière pivotante sur la partie de fixation (20, 60), une patte élastique (30) étant prévue sur la poutre à ressort (21), **caractérisé en ce que** la patte élastique (30) est découpée dans la poutre à ressort (21) et **en ce qu'**un bouton (63) est prévu sur la partie de fixation (60), lequel vient en prise dans une ouverture (32) pratiquée sur la poutre à ressort (21), et **en ce que** l'ouverture (32) pratiquée sur la poutre à ressort (21) correspond à la patte élastique (30) découpée.

2. Dispositif d'essuie-glace selon la revendication 1, **caractérisé en ce que** la partie de fixation (20, 60) présente une articulation (61).

3. Dispositif d'essuie-glace selon la revendication 2, **caractérisé en ce que** l'articulation (61) présente un axe d'articulation (62).

4. Dispositif d'essuie-glace selon la revendication 3, **caractérisé en ce que** la poutre à ressort (21) présente un crochet (22) pouvant être accroché dans l'axe d'articulation (62).

5. Dispositif d'essuie-glace selon la revendication 3 ou 4, **caractérisé en ce que** l'axe d'articulation (62) est une goupille rivetée enfoncée dans la partie de fixation (20, 60).

6. Dispositif d'essuie-glace selon l'une quelconque des revendications 1 à 5, **caractérisé en ce que** l'extrémité libre de la patte élastique (30) est cintrée.

7. Dispositif d'essuie-glace selon l'une quelconque des revendications 1 à 6, **caractérisé en ce que** la patte élastique (30) présente une moulure (31).

8. Dispositif d'essuie-glace selon l'une quelconque des revendications 1 à 7, **caractérisé en ce que** la partie de fixation (60) présente une rainure de guidage (64) pour guider la patte élastique (30).

9. Dispositif d'essuie-glace selon la revendication 4, **caractérisé en ce que** le crochet (22) pouvant être accroché dans l'articulation (61) présente un prolongement (23) à son extrémité libre.

10. Dispositif d'essuie-glace selon l'une quelconque des revendications 1 à 9, **caractérisé en ce que** la partie de fixation (60) est une pièce moulée par injection.

11. Dispositif d'essuie-glace selon la revendication 10, **caractérisé en ce que** la partie de fixation (60) peut être fabriquée en aluminium, en zinc ou en un plastique renforcé.

12. Dispositif d'essuie-glace selon l'une quelconque des revendications 1 à 11, **caractérisé en ce qu'**un recouvrement (140) peut être appliqué par-dessus la poutre à ressort (21).

13. Dispositif d'essuie-glace selon la revendication 9, **caractérisé en ce que** le prolongement (23) peut être replié autour de l'axe d'articulation (62) après que le crochet (22) a été accroché dans l'axe d'articulation (62).

14. Dispositif d'essuie-glace selon la revendication 12, **caractérisé en ce que** le recouvrement (140) présente une surface d'appui (150), qui s'applique contre la partie de fixation (151) lorsque le bras d'essuie-glace est écarté de la vitre par pivotement.

15. Dispositif d'essuie-glace selon l'une quelconque des revendications 12 et 14, **caractérisé en ce que** le recouvrement (140) est fabriqué en plastique.

16. Dispositif d'essuie-glace selon l'une quelconque des revendications 1 à 15, **caractérisé en ce que** la poutre à ressort (21) présente une surface d'appui (250) qui s'applique contre la partie de fixation (60) lorsque le bras d'essuie-glace est écarté de la vitre par pivotement.
